# EUROPÄISCHE PATENTSCHRIFT

(11) **EP 3 871 959 B1**
(45) Veröffentlichungstag und Bekanntmachung des Hinweises auf die Patenterteilung: **26.06.2024**
(21) Anmeldenummer: 21159134.2
(22) Anmeldetag: 25.02.2021
(51) Int. Cl.: B62J 1/16, B62K 7/04

(54) **FAHRRAD-KINDERSITZ**
CHILD SEAT FOR BICYCLE
SIÈGE ENFANT POUR BICYCLETTE

(30) Priorität: 28.02.2020 DE 202020101111 U
(43) Veröffentlichungstag der Anmeldung: 01.09.2021
(73) Patentinhaber: RTI Sports GmbH, 56070 Koblenz (DE)
(72) Erfinder: Rasche, Johannes, 64285 Darmstadt (DE)
(74) Vertreter: dompatent von Kreisler Selting Werner - Partnerschaft von Patent- und Rechtsanwälten mbB

(56) Entgegenhaltungen:
- EP-A1- 3 206 942
- CN-U- 205 469 504
- CN-U- 208 248 362
- DE-A1- 3 910 397
- US-A1- 2018 154 970
- Anders Geir: "ca go: The bold newcomer - Cargobike Magazine", Cargobike Magazine, 9. September 2019 (2019-09-09), XP055810883, Gefunden im Internet: URL:https://cargobikemag.com/ca-go-the-bol d-newcomer/ [gefunden am 2021-06-07]
- Urban Arrow: "Urban Arrow Extra Bench", , 3. September 2015 (2015-09-03), Seiten 1-2, XP054981872, Gefunden im Internet: URL:https://www.youtube.com/watch?v=wyywo7 IdzSU [gefunden am 2021-06-07]

## Beschreibung

Die Erfindung betrifft einen Fahrrad-Kindersitz, der insbesondere zur Anordnung in einem Lastenfahrradbehälter, d.h. einer Transportbox eines Lastenfahrrads angeordnet werden kann.

In Lastenfahrrädern mit entsprechenden Transportbehältern ist es bekannt, Sitzgelegenheiten für Kinder anzuordnen. Häufig sind diese Sitzgelegenheiten durch eingelegte Holzbretter oder dergleichen ausgebildet. Dies ist insbesondere bei längeren Fahrten oder bei Fahrten über unebenen Untergrund für die Kinder unangenehm. Insbesondere werden Stöße und Vibrationen ungedämpft auf das Kind übertragen.

In dem Dokument XP055810883 wird ein gattungsgemäße Fahrrad-Kindersitz beschrieben.

Aufgabe der Erfindung ist es, einen Fahrrad-Kindersitz mit verbessertem Komfort zu schaffen.

Die Lösung der Aufgabe erfolgt erfindungsgemäß durch einen Fahrrad-Kindersitz, der insbesondere zur Anordnung in einem Lastenfahrradbehälter geeignet ist, mit den Merkmalen des Anspruchs 1.

Der erfindungsgemäße Fahrrad-Kindersitz ist insbesondere zur Anordnung in einem Lastenfahrradbehälter, beispielsweise einer Transportbox eines Lastenfahrradbehälters geeignet. Der Fahrrad-Kindersitz weist ein Rückenteil sowie ein klappbar mit diesem verbundenes Sitzteil auf. Aufgrund der Möglichkeit, das Sitzteil umzuklappen und insbesondere nach oben in Richtung des Rückenteils klappen zu können, ist es beispielsweise bei Anordnung des Kindersitzes in einem Lastenfahrradbehälter möglich, diesen zum Transport anderer Güter zu verwenden, die sodann nicht auf die Sitzfläche des Kindersitzes gestellt werden müssen. Der Lastenfahrradbehälter kann somit auf einfache Weise zum Transport von Lasten genutzt werden, ohne den gesamten Kindersitz ausbauen zu müssen. Zwischen dem Rückenteil und dem Sitzteil ist daher erfindungsgemäß eine Schwenkachse vorgesehen, so dass das Sitzteil relativ zum Rückenteil schwenkbar ist. Bevorzugt ist hierbei, dass das Rückenteil beispielsweise starr mit dem Lastenfahrradbehälter, d.h. einer Innenwand des Lastenfahrradbehälters verbunden ist und das Sitzteil nach oben geklappt werden kann, so dass eine Sitzfläche des Sitzteils an dem Rückenteil bzw. an einer Vorderseite des Rückenteils in zusammengeklapptem Zustand anliegt. Die Verbindung verläuft vorzugsweise über eine starre Verbindung, die mit dem Rahmen, Verbindungsstreben oder dgl. fest verbunden ist.

Zur Verbesserung des Komforts wirken in aufgeklappter bzw. ausgeklappter Position des Sitzteils mit dem Sitzteil Feder- und Dämpfungselemente zusammen. Dies hat den Vorteil, dass eine Federung und Dämpfung des Sitzteils realisiert ist. Hierdurch ist der Komfort - insbesondere in vertikaler Richtung - erheblich verbessert. Insbesondere beim Überfahren von Unebenheiten werden entsprechende Stöße isoliert bzw. gedämpft.

Die ein oder mehreren Feder- und/oder Dämpfungselemente können z.B. an einer Unterseite des Sitzteils angeordnet sein. Nachfolgend wird die Erfindung anhand von Dämpfungselementen beschrieben, wobei es sich stets um Feder- und/oder Dämpfungselemente handeln kann. In eingebautem Zustand wären die Dämpfungselemente sodann zwischen dem Sitzteil und einem Bodenelement des Lastenfahrradbehälters angeordnet. Um eine ergonomisch sinnvolle Sitzposition zu realisieren, weist das Sitzteil jedoch vorzugsweise einen Abstand zum Bodenteil auf, so dass das Vorsehen von Dämpfungselementen in diesem Bereich schwierig ist bzw. diese bei hochgeklapptem Sitzteil im Laderaum angeordnet wären bzw. den Laderaum beeinträchtigen würden. Es ist daher besonders bevorzugt, dass das mindestens eine Dämpfungselement mit einer Rückwand des Sitzteils zusammenwirkt. Die Rückwand des Sitzteils ist die Seitenwand des Sitzteils, das in aufgeklapptem Zustand in Richtung des Rückenteils weist. Durch Vorsehen von Dämpfungselementen in diesem Bereich sind die Dämpfungselemente insbesondere bei hochgeklapptem Sitzteil nicht störend.

Bevorzugt sind die Dämpfungselemente an der Rückwand des Sitzteils und/oder einem Halteelement angeordnet. Das Halteelement kann hierbei entweder mit dem Rückenteil des Kindersitzes verbunden oder an einer Innenwand des Lastenfahrradbehälters angeordnet sein. Relevant ist, dass die Dämpfungselemente bei aufgeklappter bzw. heruntergeklappter Position des Sitzteils mit der Rückwand des Sitzteils zusammenwirken. Ergänzend oder alternativ können auch Drehfedern vorgesehen sein, die beispielsweise die Schwenkachse umgeben. Die Dämpfungselemente können aus unterschiedlichen, insbesondere elastischen Materialien wie beispielsweise EPP, eTPU und dgl. hergestellt sein.

Insbesondere können die Dämpfungselemente mit der Rückwand des Sitzteils fest verbunden sein und sodann in aufgeklappter Position mit einem Anschlagelement zusammenwirken. Dieses Anschlagelement kann wiederum an einer Innenwand des Lastenfahrradbehälters angeordnet und/oder mit dem Rückenteil verbunden sein. Bevorzugt ist es, dass der Fahrrad-Kindersitz eine Einheit bildet und insofern die Dämpfungselemente an der Rückwand des Sitzteils und/oder einem mit dem Rückenteil des Kindersitzes verbundenen Halteelement angeordnet sind. Dies hat den Vorteil, dass keine besonderen mit den Dämpfungselementen zusammenwirkenden oder diese haltenden Elemente in dem Lastenfahrradbehälter vorgesehen sein müssen.

Ein Halteelement ist vorgesehen, das insbesondere die Dämpfungselemente trägt oder an dem mit der Rückwand des Sitzteils verbundene Dämpfungselemente in aufgeklappter Position anliegen. Ein derartiges Halteelement ist mit dem Rückenteil verbunden.

In einer weiteren bevorzugten Ausführungsform sind mehrere Dämpfungselemente, insbesondere zwei Dämpfungselemente vorgesehen. Diese sind vorzugsweise in montiertem Zustand in einem horizontalen Abstand zueinander angeordnet. Insbesondere sind die Dämpfungselemente bezogen auf eine vertikale Mittel- oder Symmetrieebene des Fahrrad-Kindersitzes in einem gleichen Abstand zu dieser angeordnet, so dass eine gleichmäßige Dämpfung gewährleistet ist.

Vorzugsweise ist ein Halteelement vorgesehen, um das Sitzteil in einer oberen, d.h. hoch geklappten Position zu fixieren. Bei dem Halteelement kann es sich um einen Haltegurt, ein Rastelement, einen Magneten oder dgl. handeln.

Ferner ist es möglich, das Sitzteil derart auszugestalten, dass das Sitzteil verlängerbar ist. Hierdurch kann das Sitzteil auf einfache Weise an Kinder unterschiedlicher Größe angepasst werden. Insbesondere kann das Sitzteil zweiteilig ausgebildet sein, wobei die beiden Sitzteile in Längsrichtung zueinander verschiebbar sind. Eine Fixierung der beiden Teile kann durch ein Klemmelement, Rastelemente oder dgl. erfolgen.

Des weiteren ist es möglich, eine Abdeckung des Sitzelements zum Schutz vor Regen oder Verschmutzung vorzusehen.

Zur weiteren Verbesserung der Dämpfungseigenschaften ist die Schwenkachse, um die das Sitzteil relativ zum Rückenteil schwenkbar ist, einerseits parallel zu einer Oberseite des Sitzteils angeordnet und andererseits in einem horizontalen Abstand zu dieser Oberseite angeordnet. Vorzugsweise sind die Dämpfungselemente in montiertem Zustand sodann unterhalb der Schwenkachse angeordnet. Des Weiteren ist es bevorzugt, dass die Schwenkachse in das Rückenteil integriert ist. Vorzugsweise ist das Sitzteil mit einem Schwenkarm verbunden bzw. weist einen Schwenkarm auf. Das vom Sitzteil beabstandete Ende des Schwenkarms ist sodann mit der Schwenkachse verbunden bzw. wirkt mit dieser zusammen.

Zur Befestigung des Fahrrad-Kindersitzes insbesondere in einem Lastenfahrradbehälter weist das Rückenteil insbesondere an seiner Rückseite Befestigungselemente auf. Mit Hilfe der Befestigungselemente ist ein Befestigen des Fahrrad-Kindersitzes in einem Lastenfahrradbehälter möglich. Zu einer sicheren Befestigung ist es bevorzugt, dass obere und untere Befestigungselemente vorgesehen sind. Die oberen Befestigungselemente sind hierbei im Bereich der Schultern bzw. an einem oberen Ende des Rückenteils angeordnet. Die unteren Befestigungselemente sind insbesondere im Bereich der Schwenkachse angeordnet. Hierdurch ist insbesondere über drei bis vier Befestigungselemente ein sicheres Befestigen des Fahrrad-Kindersitzes in einem Lastenfahrradbehälter möglich.

In bevorzugter Weiterbildung der Erfindung ist das Rückenteil mit einem höhenverstellbaren Kopfteil verbunden. Das Kopfteil kann ferner klappbar mit dem Rückenteil verbunden sein, so dass bei eingeklapptem Kopfteil und insbesondere auch eingeklapptem Sitzteil das Volumen des Fahrrad-Kindersitzes gering ist.

Des Weiteren ist es bevorzugt, dass das Rückenteil mit einem Sicherheitsgurt verbunden ist. Die Befestigung des Sicherheitsgurtes erfolgt hierbei insbesondere im Bereich der Befestigungselemente, wobei es besonders bevorzugt ist, dass der Sicherheitsgurt über die Befestigungselemente in dem Lastenfahrradbehälter befestigt ist. Hierdurch ist insbesondere bei einem Aufprall ein sicherer Halt des Kindes über den Sicherheitsgurt gewährleistet.

Nachfolgend wird die Erfindung anhand einer bevorzugten Ausführungsform unter Bezugnahme auf die anliegenden Zeichnungen näher erläutert.

Es zeigen:
- Fig. 1: eine schematische perspektivische Vorderansicht einer bevorzugten Ausführungsform des Fahrrad-Kindersitzes,
- Fig. 2: eine schematische perspektivische Rückansicht einer bevorzugten Ausführungsform des Fahrrad-Kindersitzes und
- Fig. 3: eine schematische perspektivische Vorderansicht einer bevorzugten Ausführungsform des Fahrrad-Kindersitzes in eingeklappter bzw. hochgeklappter Position des Sitzteils.

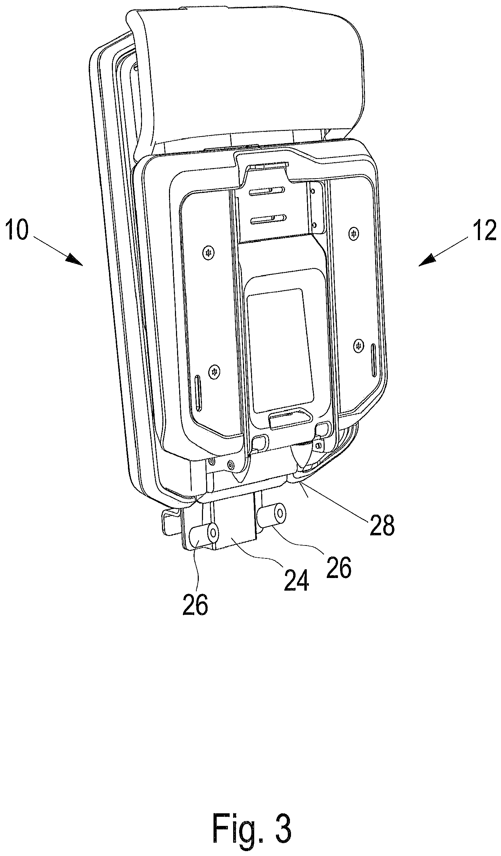

Der erfindungsgemäße Fahrrad-Kindersitz weist ein Rückenteil 10 sowie ein Sitzteil 12 auf. Das Sitzteil 12 ist mit einem Schwenkarm 14 verbunden. Dieser weist in Richtung des Rückenteils 10. Ferner ist eine Schwenkachse 16 vorgesehen, die in das Rückenteil 10 integriert ist. Die Schwenkachse 16 ist in montiertem Zustand horizontal bzw. parallel zu einer Oberseite 18 des Sitzteils 12 ausgebildet. Um die Schwenkachse 16 kann das Sitzteil 12 in Richtung eines Pfeils 20 nach oben geschwenkt werden, so dass die Oberseite 18 des Sitzteils 12 an einer Vorderseite 22 des Rückenteils 10 anliegt (Fig. 3).

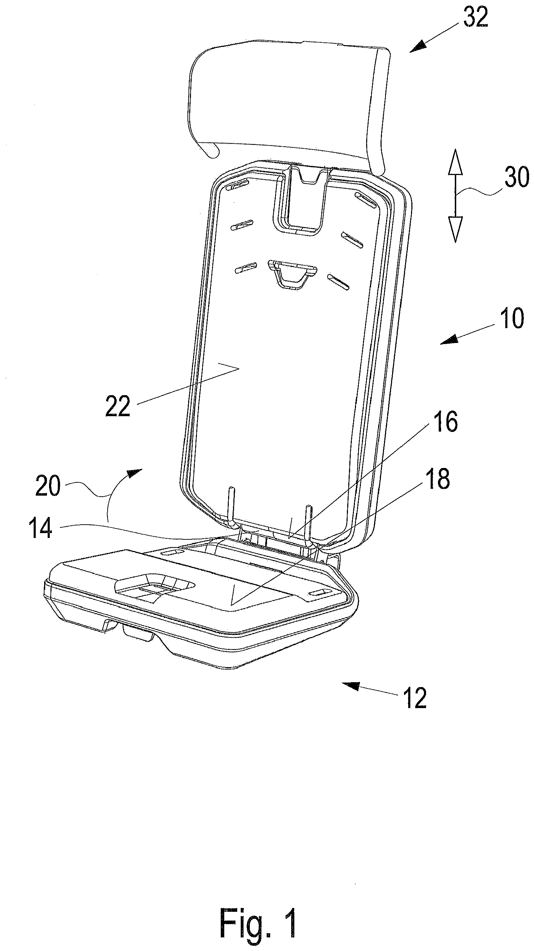

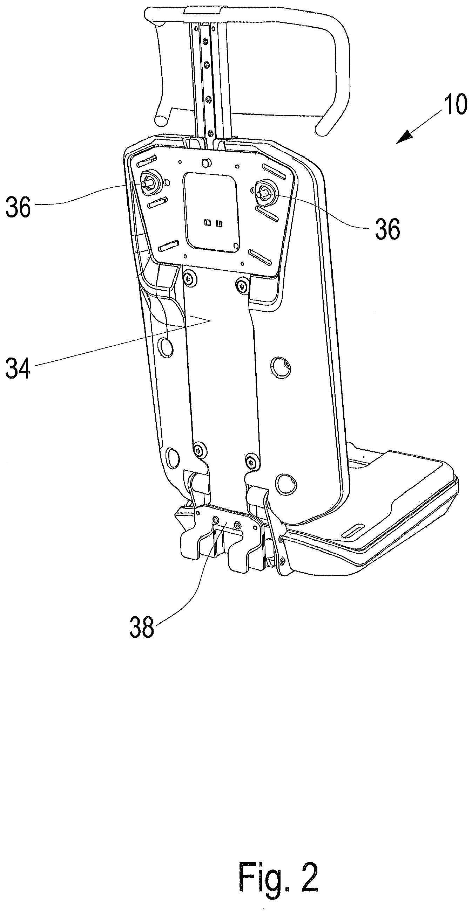

Zur Verbesserung des Komforts sind an einem mit dem Rückenteil 10 verbundenen Halteelement 24 (Fig. 3) im dargestellten Ausführungsbeispiel zwei Dämpfungselemente 26 angeordnet. Die beiden Dämpfungselemente 26 sind im dargestellten Ausführungsbeispiel als Elastomerkörper ausgebildet. In auf- bzw. ausgeklappter Position des Sitzteils 12 (Fig. 1 und 2) liegt eine Rückwand 28 des Sitzteils 12 (Fig. 3) an den Dämpfungselementen 26 an. Somit ist in einer sehr platzsparenden Weise eine gute Dämpfung des Sitzteils 12 realisiert.

Ferner ist mit dem Rückenteil 10 ein in Richtung eines Pfeils 30 verschiebbares Kopfteil 32 verbunden. Das Kopfteil 32 weist ferner nicht dargestellte Polsterelemente auf, die an dem dargestellten Rahmenteil des Kopfteils 32 befestigbar sind. Entsprechende Polsterelemente sind auch auf der Oberseite 22 des Rückenteils 10 sowie auf der Oberseite 18 des Sitzteils 12 angeordnet.

Zur Befestigung des erfindungsgemäßen Fahrrad-Kindersitzes, insbesondere an einer Innenwand eines Lastenfahrradbehälters, sind an einer Rückseite 34 des Rückenteils 10 obere Befestigungselemente 36 angeordnet. Die oberen Befestigungselemente 36 können unmittelbar insbesondere mit einer Verstrebung oder einem Rahmenelement des Lastenfahrradbehälters verschraubt werden. Ferner ist zumindest ein unteres Befestigungselement 38 vorgesehen. Im dargestellten Ausführungsbeispiel ist das untere Befestigungselement 38 hakenförmig bzw. U-förmig ausgebildet, so dass eine nach unten weisende Öffnung ausgebildet ist. Mittels dieser Öffnung kann das untere Befestigungselement beispielsweise auf einen Querträger oder ein anderes Versteifungselement des Lastenfahrradbehälters aufgesteckt werden. Eine derartige Fixierung ist ausreichend, um entsprechende in horizontale Richtung wirkende Kräfte aufnehmen zu können.

## Patentansprüche

1. Fahrrad-Kindersitz, insbesondere zur Anordnung in einem Lastenfahrradbehälter, mit
einem Rückenteil (10),
einem klappbar mit dem Rückenteil (10) verbundenen Sitzteil (12),
einer zwischen dem Rückenteil (10) und dem Sitzteil (12) angeordneten Schwenkachse (16), um die das Sitzteil (12) relativ zum Rückenteil (10) schwenkbar ist,
**gekennzeichnet durch** mindestens ein mit dem Sitzteil (10) in aufgeklappter Position zusammenwirkenden Feder- und/oder Dämpfungselement (26), wobei das mindestens eine Feder-und/oder Dämpfungselement (26) zwischen dem Sitzteil (12) und einem mit dem Rückenteil (10) verbundenen Halteelement (24) angeordnet ist.

2. Fahrrad-Kindersitz nach Anspruch 1, **dadurch gekennzeichnet, dass** das mindestens eine Feder- und/oder Dämpfungselement (26) mit einer Rückwand (28) des Sitzteils (12) zusammenwirkt.

3. Fahrrad-Kindersitz nach Anspruch 1 oder 2, **dadurch gekennzeichnet, dass** das mindestens eine Feder- und/oder Dämpfungselement (26) zwischen der Rückwand (28) des Sitzteils (12), und dem Halteelement (24) angeordnet ist.

4. Fahrrad-Kindersitz nach Anspruch 3, **dadurch gekennzeichnet, dass** das Halteelement (24) fest mit dem Rückenteil (10) verbunden ist.

5. Fahrrad-Kindersitz nach einem der Ansprüche 1 bis 4, **dadurch gekennzeichnet, dass** zumindest zwei Feder- und/oder Dämpfungselemente (26) vorgesehen sind, die in einem horizontalen Abstand zueinander angeordnet sind.

6. Fahrrad-Kindersitz nach einem der Ansprüche 1 bis 5, **dadurch gekennzeichnet, dass** die Schwenkachse (16) parallel in einem horizontalen Abstand zur Oberseite (18) des Sitzteils (12) angeordnet ist.

7. Fahrrad-Kindersitz nach einem der Ansprüche 1 bis 6, **dadurch gekennzeichnet, dass** die Schwenkachse (16) in das Rückenteil (10) integriert ist.

8. Fahrrad-Kindersitz nach einem der Ansprüche 1 bis 7, **dadurch gekennzeichnet, dass** das Sitzteil (12) einen Schwenkarm (14) aufweist, der mit der Schwenkachse (16) verbunden ist.

9. Fahrrad-Kindersitz nach einem der Ansprüche 1 bis 8, **dadurch gekennzeichnet, dass** das Rückenteil (10) mindestens ein oberes Befestigungselement (36) und mindestens ein unteres Befestigungselement (38) zur Befestigung in einem Lastenfahrradbehälter aufweist.

10. Fahrrad-Kindersitz nach einem der Ansprüche 1 bis 9, **dadurch gekennzeichnet, dass** das Rückenteil (10) mit einem höhenverstellbaren Kopfteil (32) verbunden ist.

11. Fahrrad-Kindersitz nach einem der Ansprüche 1 bis 10, **dadurch gekennzeichnet, dass** das Rückenteil (10) mit einem Sicherheitsgurt verbunden ist.

12. Fahrrad-Kindersitz nach Anspruch 9, **dadurch gekennzeichnet, dass** das Rückenteil (10) im Bereich der Befestigungselemente (36, 38) mit einem Sicherheitsgurt verbunden ist.

13. Fahrrad-Kindersitz nach einem der Ansprüche 1 bis 12, **dadurch gekennzeichnet, dass** das Sitzteil (12) mindestens zweiteilig ist, so dass die Sitzlänge des Sitzteils (12) in der Größe verstellbar ist.

## Claims

1. A child seat for a bicycle, in particular for arrangement in a cargo bike box, comprising
a back part (10),
a seat part (12) connected to the back part (10) a foldable manner,
a pivot axis (16) disposed between the back part (10) and the seat part (12) about which the seat part (12) is pivotable relative to the back part (10),
**characterized by**
at least one spring and/or damping element (26) interacting with the seat part (10) in the unfolded position, wherein the at least one spring and/or damping element (26) is disposed between the seat part (12) and a holding element (24) connected to the back part (10).

2. The child seat for a bicycle according to claim 1, **characterized in that** at least one spring and/or damping element (26) interacts with a rear wall (28) of the seat part (12).

3. The child seat for a bicycle according to claim 1 or 2, **characterized in that** the at least one spring and/or damping element (26) is disposed between the rear wall (28) of the seat part (12) and the holding element (24).

4. The child seat for a bicycle according to claim 3, **characterized in that** the holding element (24) is firmly connected to the back part (10).

5. The child seat for a bicycle according to any one of claims 1 to 4, **characterized in that** at least two spring and/or damping elements (26) are provided which are arranged at a horizontal distance from each other.

6. The child seat for a bicycle according to any one of claims 1 to 5, **characterized in that** the pivot axis (16) is arranged in parallel at a horizontal distance to the top (18) of the seat part (12).

7. The child seat for a bicycle according to any one of claims 1 to 6, **characterized in that** the pivot axis (16) is integrated in the back part (10).

8. The child seat for a bicycle according to any one of claims 1 to 7, **characterized in that** the seat part (12) comprises a pivot arm (14) connected to the pivot axis (16).

9. The child seat for a bicycle according to any one of claims 1 to 8, **characterized in that** the back part (10) comprises at least one upper fastening element (36) and at least one lower fastening element (38) for fastening in a cargo bike box.

10. The child seat for a bicycle according to any one of claims 1 to 9, **characterized in that** the back part (10) is connected to a height-adjustable head part (32).

11. The child seat for a bicycle according to any one of claims 1 to 10, **characterized in that** the back part (10) is connected to a safety belt.

12. The child seat for a bicycle according to claim 9, **characterized in that** the back part (10) is connected to a safety belt in the area of the fastening elements (36, 38).

13. The child seat for a bicycle according to any one of claims 1 to 12, **characterized in that** the seat part (12) consists of at least two parts, so that the seat length of the seat part (12) is adjustable in size.

## Revendications

1. Siège enfant pour bicyclette, notamment pour être disposé dans un contenant de bicyclette de transport, avec
une partie dossier (10),
une partie siège (12) reliée à la partie dossier (10) de façon rabattable,
un axe de pivotement (16) disposé entre la partie dossier (10) et la partie siège (12) autour duquel la partie siège (12) peut être pivotée par rapport à la partie dossier (12),
**caractérisé par** au moins un élément ressort et/ou amortisseur (26) agissant ensemble avec la partie siège (12) en position baissée, ledit au moins un élément ressort et/ou amortisseur (26) étant disposé entre la partie siège (12) et un élément de maintien (24) relié à la partie dossier (10).

2. Siège enfant pour bicyclette selon la revendication 1, **caractérisé en ce que** ledit au moins un élément ressort et/ou amortisseur (26) interagit avec une paroi arrière (28) de la partie siège (12).

3. Siège enfant pour bicyclette selon la revendication 1 ou 2, **caractérisé en ce que** ledit élément ressort et/ou amortisseur (26) est disposé entre la paroi arrière (28) de la partie siège (12) et l'élément de maintien (24).

4. Siège enfant pour bicyclette selon la revendication 3, **caractérisé en ce que** l'élément de maintien (24) est fermement rattaché à la partie dossier (10).

5. Siège enfant pour bicyclette selon l'une des revendications 1 à 4, **caractérisé en ce que** sont prévus au moins deux éléments ressort et/ou amortisseur (26) qui sont disposés à une distance horizontale les uns des autres.

6. Siège enfant pour bicyclette selon l'une des revendications 1 à 5, **caractérisé en ce que** l'axe de pivotement (16) est disposé parallèlement à, et à une distance horizontale de, la face supérieure (18) de la partie siège (12).

7. Siège enfant pour bicyclette selon l'une des revendications 1 à 6, **caractérisé en ce que** l'axe de pivotement (16) est intégré à la partie dossier (10).

8. Siège enfant pour bicyclette selon l'une des revendications 1 à 7, **caractérisé en ce que** la partie siège (12) comprend un bras de pivotement (14) qui est relié à l'axe de pivotement (16).

9. Siège enfant pour bicyclette selon l'une des revendications 1 à 8, **caractérisé en ce que** la partie dossier (10) comprend au moins un élément de fixation supérieur (36) et au moins un élément de fixation inférieur (38) pour la fixation dans un contenant de bicyclette de transport.

10. Siège enfant pour bicyclette selon l'une des revendications 1 à 9, **caractérisé en ce que** la partie dossier (10) est relié à une partie de tête (32) réglable en hauteur.

11. Siège enfant pour bicyclette selon l'une des revendications 1 à 10, **caractérisé en ce que** la partie dossier (10) est relié à une ceinture de sécurité.

12. Siège enfant pour bicyclette selon la revendication 9, **caractérisé en ce que** la partie dossier (10) est relié à la ceinture de sécurité dans la zone des éléments de fixation (36, 38).

13. Siège enfant pour bicyclette selon l'une des revendications 1 à 12, **caractérisé en ce que** la partie siège (12) comprend au moins deux parties de façon que la longueur d'assise de la partie siège (12) soit réglable en taille.
